Europäisches Patentamt

**European Patent Office**

**Office européen des brevets**

(19)

(11) Numéro de publication: **0 014 660**
**B1**

(12) **FASCICULE DE BREVET EUROPEEN**

(45) Date de publication du fascicule du brevet: **18.08.82**

(21) Numéro de dépôt: **80400182.4**

(22) Date de dépôt: **06.02.80**

(51) Int. Cl.³: **F 16 F 9/50,** F 16 F 9/06,
B 64 C 25/58

(54) **Amortisseur et amortisseur-vérin notamment pour trains d'atterrissage d'aérodyne.**

(30) Priorité: **06.02.79 FR 7902965**

(43) Date de publication de la demande:
**20.08.80 Bulletin 80/17**

(45) Mention de la délivrance du brevet:
**18.08.82 Bulletin 82/33**

(84) Etats contractants désignés:
**DE GB IT**

(56) Documents cités:
**FR - A - 866 370**
**FR - A - 914 337**
**FR - A - 955 825**
**FR - A - 2 048 364**
**FR - A - 2 314 403**
**FR - A - 2 340 482**
**FR - A - 2 370 196**
**GB - A - 727 574**
**US - A - 3 724 832**
**US - A - 3 888 436**

(73) Titulaire: **MESSIER-HISPANO-BUGATTI (S.A)**
**5, rue Louis Lejeune**
**F-92120 Montrouge (FR)**

(72) Inventeur: **Masclet, Jean**
**11, Boulevard Davout**
**F-75020 Paris (FR)**
Inventeur: **Veaux, Jacques**
**16, boulevard de la Liberté**
**F-92320 Châtillon (FR)**

(74) Mandataire: **Flavenot, Bernard**
**S.E.D.I.C. 21, rue Molière**
**F-92120 Montrouge (FR)**

Courier Press, Leamington Spa, England.

# Amortisseur et amortisseur-vérin notamment pour trains d'atterrissage d'aérodyne

L'invention a pour objet des perfectionnements aux amortisseurs et amortisseur-vérins, notamment du type de ceux équipant les trains d'atterrissage d'aérodyne.

On connait déjà de nombreux amortisseurs de ce type, comprenant une tige d'amortisseur montée coulissante dans un cylindre d'amortisseur, l'un ou/et l'autre de ces éléments renfermant une ou deux chambres de gaz sous pression, faisant office de ressort pneumatique pour rappeler le dispositif en position d'équilibre après amortissement du déplacement de la tige dans le cylindre, résultant d'une dissipation d'énergie par laminage d'un fluide hydraulique au travers d'orifices calibrés pour les vitesses normales d'atterrissage, de l'ordre de 3 m/s, permettant d'absorber l'energie à l'impact.

Certains de ces dispositifs connus comprennent également des clapets munis d'orifices de laminage à section variable selon la vitesse d'enfoncement ou le sens de passage du fluide, ainsi que des moyens de freinage en fin de détente de l'amortisseur, afin de rendre ce dernier efficace lors du roulement de l'aérodyne sur sols non préparés ou sur pistes dallées ou d'absorber certaines pointes d'effort, afin d'absorber les effets du phénomène de résonnance au sol qui se manifeste sur les hélicoptères, à la limite de la sustentation, juste avant le décollage, et afin de ne pas laisser le dispositif se détendre brusquement, avec un choc lorsqu'il arrive en butée en position détentue.

Mais ces dispositifs connus s'avèrent ne pas être adaptés aux atterrissages en catastrophe ou au crash de l'aérodyne, avec des vitesses verticales de l'ordre de 10 à 12 m/s, pour lesquelles les orifices de laminage en compression apparaissent sous-dimensionnés, de sorte que l'amortisseur se comporte comme un élément quasi-rigide, transmettant à la structure de l'aérodyne la totalité des efforts qu'il reçoit, ce qui provoque la destruction de l'aérodyne, ou la destruction de l'amortisseur entraînant ensuite celle de l'aérodyne.

On connait, par ailleurs, des amortisseur-vérins susceptibles d'amener les atterrisseurs indifféremment en position rentrée, lors du vol de l'aérodyne, en position abaissée pour l'atterrissage et le roulage ainsi qu'en position surbaissée au sol, pour faciliter la logeabilité de l'aérodyne dans un hangar, l'accessibilité à certaines parties de l'aérodyne, son ancrage sur son aire de stationnement, etc. Les amortisseur-vérins décrits dans les FR—A 2.340.482 et FR—A 2.370.196 comprennent un amortisseur, pouvant être du type présenté ci-dessus, et monté en bout d'une tige de vérin, dont une première chambre fait office de cylindre pour l'amortisseur, et elle-même solidaire d'un piston de vérin monté coulissant dans un cylindre de vérin, avec lequel le piston définit une chambre commandant la descente du train d'atterrissage lorsqu'elle est alimentée en fluide hydraulique, et commandant la mise en position surbaissée, lorsqu'elle est vidée, sans modification de la charge de l'amortisseur. De plus, un piston de relevage, monté coulissant dans une seconde chambre de la tige de vérin, séparée de la première, et constituant une chambre de relevage de l'atterrisseur, permet de charger l'amortisseur en tirant la tige de ce dernier vers l'intérieur de la tige de vérin, lorsque cette seconde chambre est alimentée en fluide hydraulique et que la chambre de descente est vidée, ce qui amène l'atterrisseur en position rentrée. Un dispositif de verrouillage mécanique, par exemple à griffes, ou hydraulique, comprenant un clapet de verrouillage hydraulique à ouverture commandée, est, en outre, prévu pour verrouiller la tige de vérin en position sortie par rapport au cylindre de vérin, après remplissage de la chambre de descente. Dans le cas d'un dispositif hydraulique, un clapet de surpression disposé en bas de la chambre de descente autorise une prolongation de la course par vidange de la chambre de descente en cas de crash.

Notamment, il est connu par le US—A 3.724.832 un amortisseur de suspension comprenant une tige d'amortisseur renfermant une chambre de rappel élastique à basse pression, et montée coulissante avec étanchéité à l'intérieur d'une première chambre remplie de fluide hydraulique d'un cylindre, l'extrémité de la tige interne au cylindre portant un piston guidé de façon qu'il s'étende à l'extérieur d'un manchon solidaire d'une paroi transversale du cylindre séparant la première chambre d'une seconde chambre du cylindre dans laquelle un piston séparateur monté coulissant avec étanchéité sépare une chambre de rappel élastique à haute pression, d'un volume de fluide hydraulique, le piston de la tige d'amortisseur définissant, avec le manchon, un passage de laminage en compression, le piston séparateur portant une tige traversant la paroi transversale du cylindre, et guidée de façon qu'elle s'étende à l'intérieur du manchon dont la base présente plusieurs passages radiaux de section relativement grande, de sorte qu'en cas d'enfoncement de la tige d'amortisseur dans le cylindre avec une vitesse élevée, le piston séparateur soit déplacé à l'encontre de la chambre élastique de rappel à haute pression, en découvrant dans sa position de fin de course un passage à section relativement grande, et conditionné pour la vitesse d'enfoncement de la tige dans le cylindre.

Les dispositifs qui viennent d'être décrits ci-dessus donnent des solutions relativement intéressantes, mais qui ont toutes l'inconvénient de ne pas utiliser toute la course de l'amortisseur au mieux de leurs possibilités pour absorber une part supplémentaire de l'énergie de crash.

Le problème que l'on vise à résoudre par la présente invention consiste à concevoir des amortisseurs et amortisseurs-vérins perfectionnés, capables d'absorber une fraction de l'énergie de crash pouvant être de trois à quatre fois supérieure à l'énergie maximum normale, absorbée pour des vitesses normales d'atterrissage, cette fraction de l'énergie de crash étant elle-même absorbée à des vitesses de trois à quatre fois supérieures aux vitesses normales, et la fraction complémentaire de l'énergie de crash étant absorbée par la structure de l'aérodyne supportant des amortisseurs ou amortisseurs-vérins.

Selon une caractéristique de la présente invention, l'amortisseur de suspension, notamment pour train d'atterrissage d'aérodyne, comprenant une tige d'amortisseur renfermant une chambre de rappel élastique à basse pression, et montée coulissante avec étanchéité à l'intérieur d'une première chambre, remplie de fluide hydraulique, d'un cylindre, l'extrémité de la tige interne au cylindre portant un piston guidé sur la face externe d'un premier manchon, solidaire d'une première paroi transversale du cylindre, séparant la première chambre d'une seconde chambre du cylindre, dans laquelle un piston séparateur, monté coulissant avec étanchéité, sépare une chambre de rappel élastique à haute pression d'un volume de fluide hydraulique, le piston de la tige d'amortisseur définissant avec le manchon au moins un orifice permanent de laminage en compression, ledit piston séparateur portant une tige rainurée, traversant la première paroi transversale du cylindre et guidée à l'intérieur du premier manchon dont la base présente un passage radial de section très supérieure à celle du ou des orifices permanents de laminage en compression, de sorte qu'en cas d'enfoncement de la tige d'amortisseur dans le cylindre, avec une vitesse très supérieure à celle pour laquelle le ou les orifices permanents de laminage en compression ont été calibrés, le piston séparateur est déplacé à l'encontre de la chambre élastique de rappel à haute pression, en découvrant des orifices de passage du fluide hydraulique, définis par les rainures de la tige rainurée et conditionnés pour la vitesse d'enfoncement de la tige dans le cylindre, ledit amortisseur ce caractérise en ce que la tige rainurée est guidée par un épaulement interne au premier manchon et présente une première rainure longitudinale qui, à la suite d'un déplacement du piston séparateur en compression, vient en regard de l'épaulement et définit avec lui un orifice autorisant le libre passage, vers la chambre de rappel à basse pression, du fluide hydraulique de la première chambre du cylindre s'écoulant au travers du passage radial à la base du premier manchon.

Selon une autre caractéristique, l'amortisseur se caractérise en ce que l'un au moins des orifices permanents de laminage en compression est constitué par la coopération du piston de la tige d'amortisseur et d'une rainure longitudinale sur la face externe du premier manchon dont l'extrémité libre est conformée en tête élargie, percée d'au moins un orifice permanent de libre passage du fluide hydraulique, et guidée sur la face interne de la tige d'amortisseur.

Selon une autre caractéristique, l'amortisseur se caractérisé en ce que la tige rainurée présente à sa base une seconde rainure longitudinale dont l'extrémité la plus proche du piston séparateur permet, en position détendue de l'amortisseur, la communication par l'intermédiaire du passage radial du premier manchon entre la première chambre du cylindre et le volume de fluide hydraulique de la seconde chambre, de sorte que pour des charges en compression supérieures aux charges normales, le piston séparateur et la tige rainurée sont déplacés, et la seconde rainure s'étend de part et d'autre de la première cloison transversale, pour favoriser l'écoulement de fluide hydraulique de la première chambre vers le volume de fluide hydraulique de la seconde chambre.

Selon une autre caractéristique, l'amortisseur se caractérise en ce qu'un clapet de freinage en détente de la chambre basse pression, retenu dans une partie de la première chambre du cylindre, définie entre piston de tige d'amortisseur, tige d'amortisseur et cylindre, est disposé en regard d'orifices de libre passage du fluide hydraulique, percés dans le piston de la tige d'amortisseur, les déplacements du clapet étant limités entre le piston et une butée annulaire portée par la tige d'amortisseur, et limitant la sortie de celle-ci hors du cylindre, et en ce qu'un clapet de freinage en détente de la chambre haute pression est monté dans la première chambre du cylindre, ses déplacements étant limités entre la première paroi transversale du cylindre et un siège constitué par un épaulement interne au cylindre et un épaulement externe au premier manchon en regard l'un de l'autre, au-delà du passage radial du premier manchon, vers l'extrémité libre de ce dernier.

Selon une autre caractéristique, l'amortisseur se caractérise en ce que le cylindre comprend une troisième chambre remplie de fluide hydraulique dans laquelle une tige de vérin, montée coulissante avec étanchéité, définit respectivement par sa face interne et par sa face externe une chambre de descente et une chambre de relevage susceptibles d'être alimentées en fluide hydraulique pour assurer respectivement la sortie et la rentrée de la tige de vérin de ou dans la troisième chambre du cylindre.

Selon une autre caractéristique, l'amortisseur se caractérise en ce que la troisième chambre du cylindre est séparée de la seconde chambre par une seconde paroi transversale du cylindre, solidaire d'un second manchon, présentant à sa base un passage radial de section très supérieure à celle du ou des orifices permanents de laminage en compression, et s'étendant axialement dans la troisième chambre, la tige rainurée solidaire du piston séparateur traversant également la seconde paroi en étant également guidée dans le second manchon, et présentant une seconde rainure longitudinale, dont l'extrémité la plus proche du piston séparateur permet, en position détendue de l'amortisseur, la communication entre la troisième chambre du cylindre et le volume de fluide hydraulique de la seconde chambre, par l'intermédiaire du passage radial à la base du second manchon, de sorte que pour des charges en compression supérieures aux charges normales, le piston séparateur et la tige rainurée sont déplacés, et la seconde rainure s'étend de part et d'autre de la seconde cloison transversale, pour favoriser l'écoulement du fluide hydraulique de la troisième chambre vers le volume de fluide hydraulique de la seconde chambre.

Selon une autre caractéristique, l'amortisseur se caractérise en ce qu'un piston de rétraction, monté coulissant avec étanchéité, d'une part, à l'intérieur de la première chambre du cylindre, d'autre part, autour de la tige d'amortisseur interne à la première chambre, définit avec le cylindre une chambre de rétraction, susceptible d'être alimentée en fluide hydraulique, pour appliquer le piston de rétraction contre une butée solidaire de la tige d'amortisseur, et commander la rétraction de cette dernière dans la première chambre du cylindre.

Selon une autre caractéristique, l'amortisseur se caractérise en ce qu'un clapet de freinage en détente de la chambre basse pression est retenu entre la tête élargie et une butée annulaire de l'extrémité libre du premier manchon, en regard des orifices permanents de libre passage percés dans la tête élargie, et en ce qu'un clapet de freinage en détente de la chambre haute pression est monté dans la troisième chambre du cylindre, entre la seconde paroi transversale du cylindre et un siège constitué par un épaulement interne au cylindre et un épaulement externe au second manchon, en regard l'un de l'autre, au-delà du passage radial du second manchon vers l'extrémité libre de ce dernier.

Selon une autre caractéristique, l'amortisseur se caractérise en ce que la ou les rainures de la tige rainurée sont de section progressive afin d'adapter les orifices de passage qu'elles définissent aux vitesses d'enfoncement de la ou des tiges dans le cylindre.

La présente invention sera mieux comprise à l'aide des exemples particuliers de réalisation qui seront décrits ci-après, à titre non limitatif, en référence aux figures en annexe dans lesquelles:

— la figure 1 est une vue en coupe axiale d'un amortisseur pour l'équipement de trains d'atterrissage d'aérodyne, en particulier d'hélicoptère,

— la figure 2 est un diagramme représentant l'effort en fonction de la course dans un amortisseur selon la figure 1,

— et la figure 3 est une vue analogue à la figure 1 pour un amortisseur-vérin également pour train d'atterrissage d'aérodyne, et en particulier d'hélicoptère.

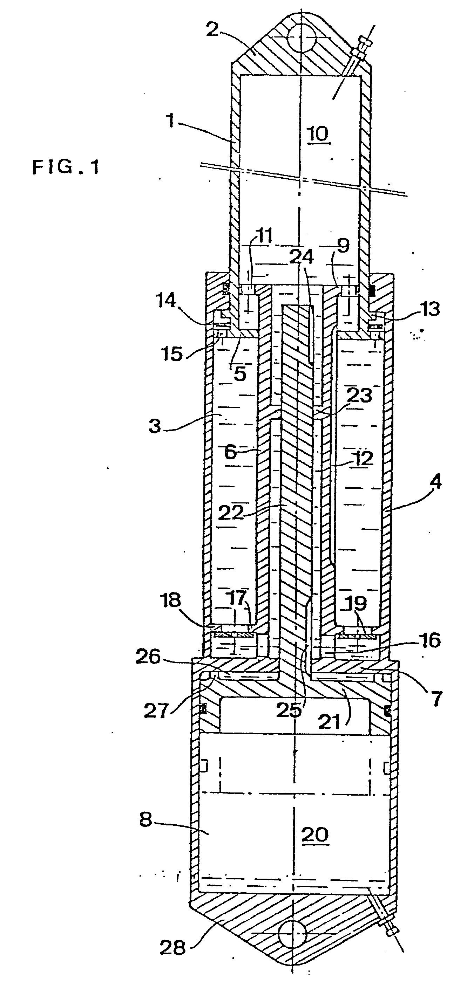

En référence à la figure 1, le dispositif comprend une tige d'amortisseur 1, susceptible d'être fixée à la structure de l'aérodyne, par l'attache 2 de son extrémité supérieure, et montée coulissante avec étanchéité dans une première chambre 3 remplie d'un fluide hydraulique ci-après dénommé huile, d'un cylindre 4 susceptible d'être fixé aux roues ou au balancier de l'atterrisseur par son attache 28. L'extrémité de la tige 1 reçue dans la chambre 3 du cylindre 4 porte un piston d'amortisseur 5, monté coulissant sur la face interne de la chambre 3 et sur la face externe d'un manchon 6, solidaire d'une paroi transversale 7 du cylindre 4 séparant la première chambre 3 d'une seconde chambre 8 du cylindre 4. Le manchon 6 s'étend axialement dans la première chambre 3, et son extrémité libre est conformée en tête élargie 9 coulissant à l'intérieur de la tige 1, qui renferme une chambre de gaz sous pression 10 adjacente à un volume d'huile en communication avec l'intérieur de la chambre 3 par des orifices permanents 11 de libre passage, percés dans la tête élargie 9 du manchon 6, et par un orifice permanent de laminage en compression défini par le piston 5 et une rainure longitudinale 12 sur la face externe du manchon 6. La tige 1 présente également une butée annulaire 13 limitant sa sortie hors de la chambre 3, sous la poussée de la chambre de gaz sous pression 10. Cette butée 13 limite également les déplacements d'un clapet 14 de freinage en détente de la chambre 10, lequel est disposé, en regard d'orifices permanents de libre passage 15 percés dans le piston 5, dans la partie de la chambre 3 délimitée par le cylindre 4, la tige 1 et le piston 5. Le clapet 14 est constitué d'un disque annulaire percé de diaphragmes en regard des orifices 15. Un passage radial 16, de section très supérieure à celle de l'orifice permanent de laminage en compression défini par la rainure 12 et le piston 5, traverse la base du manchon 6, qui présente un épaulement annulaire externe 17 juste au-delà du passage 16. En regard de l'épaulement 17, le cylindre 4 présente un épaulement annulaire 18, les deux épaulements 17 et 18 servant de siège pour un clapet 19 de freinage en détente d'une chambre de gaz sous pression 20, délimitée dans la seconde chambre 8 du cylindre 4 par un piston séparateur 21, monté coulissant avec étanchéité dans cette seconde chambre 8, la pression dans la chambre 20 étant supérieure à celle dans la chambre 10. Le clapet 19, comme le clapet 14, est constitué d'un disque annulaire percé de diaphragmes, et ses deplacements son limités entre son siège et la cloison 7. Le piston séparateur 21 porte une tige rainurée 22 qui traverse la cloison 7 et se trouve guidée dans le manchon 6 par un épaulement annulaire interne 23 de ce manchon 6. La tige rainurée 22 présente une première rainure longitudinale 24, au-delà de l'épaulement 23 et débouchant sur l'extrémité libre de la tige rainurée 22, ainsi qu'une seconde rainure longitudinale 25, à la base de la tige 22, et dont l'extrémité la plus proche du piston séparateur 21 met en communication le volume annulaire défini entre le manchon 6 et la tige 22 avec un volume d'huile 26, défini dans la seconde chambre 8 du cylindre, entre la cloison 7 et le piston séparateur 21, grâce à la butée annulaire 27 de ce dernier. Le dispositif dont la structure vient d'être décrite, fonctionne de la manière suivante: pour des atterrissages s'effectuant avec des vitesses verticales normales, de l'ordre de 3 m/s, la tige 1 s'enfonce dans le cylindre 4 en provoquant un laminage, au passage, entre le piston 5 et le manchon 6, dans la rainure 12, de l'huile chassée de la chambre 3 pour venir comprimer la chambre basse pression 10 dans la tige 1. Simultanément, le clapet 14 est soulevé du piston 5 et le remplissage de la partie de la chambre 3 recevant le clapet 14 est assuré au travers des orifices 15.

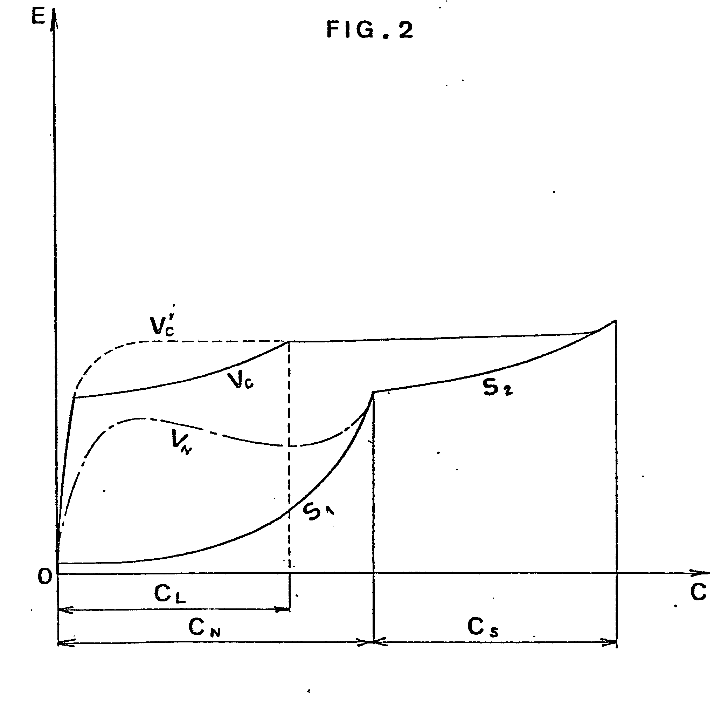

Sur la figure 2, où les courbes statiques de l'effort E en fonction de la course C d'un tel amortisseur bichambre ont été représentées par S1 et S2 respectivement pour la chambre basse pression 10 et la chambre haute pression 20, la courbe dynamique pour un atterrissage à une vitesse limite d'utilisation normale de 3 m/s est donnée par $V_N$. Une absorption dynamique de l'énergie d'atterrissage est donc possible, dans des conditions normales, sur la course normale $C_N$, correspondant à l'enfoncement maximal de la tige 1 dans le cylindre 4.

Le retour en position d'équilibre sous charge statique de l'aerodyne, ou le retour en position en butée détendue, comme représenté sur la figure 1, est atteint avec un freinage en détente de la chambre basse pression 10 grâce au clapet 14 appliqué contre le piston 5, ce qui freine le retour de l'huile dans la chambre 3 en-dessous du piston 5.

Pour une prise de contact avec le sol, s'effectuant avec une vitesse de 10 à 13 m/s, lors d'un crash par exemple, l'orifice de laminage défini par la rainure 12 est d'une section insuffisante pour permettre un débit convenable d'huile vers la chambre 10. En conséquence, la pression croît rapidement dans la chambre 3, et dans le volume d'huile 27, avec lequel la chambre 3 communique par l'orifice radial 16 et la rainure 25, jusqu'à atteindre la pression de la chambre haute pression 20. Ensuite, le piston séparateur 21 est déplacé contre l'effet de la chambre haute pression 20, en entraînant avec lui la tige rainurée 22. La rainure 25 s'étend alors de part et d'autre de la cloison 7, et facilite le passage de l'huile de la chambre 3 vers le volume 26. Après une certaine course $C_L$ du piston séparateur 21 et de la tige rainurée 22, la rainure 24 vient en regard de l'épaulement 23 interne au manchon 6. L'huile peut alors s'écouler librement de la chambre 3 dans la tige 1 en passant par l'orifice radial 16 et l'intérieur du manchon 6. Dans cette configuration, le dispositif travaille en limiteur d'effort et peut accomplir toute la course normale $C_N$ augmentée d'une surcourse $C_S$ en absorbant de l'énergie, sans pointe d'effort, ce qui apparaît sur la courbe $V_C$ de la figure 2. En donnant à la rainure 25 une section progressive, il est même possible d'obtenir une absorption selon la courbe $V_C'$. En détente, le freinage est assuré par le clapet 19 pour la détente de la chambre haute pression 20, et par le clapet 14 pour la détente de la chambre basse pression 10, comme déjà expliqué ci-dessus.

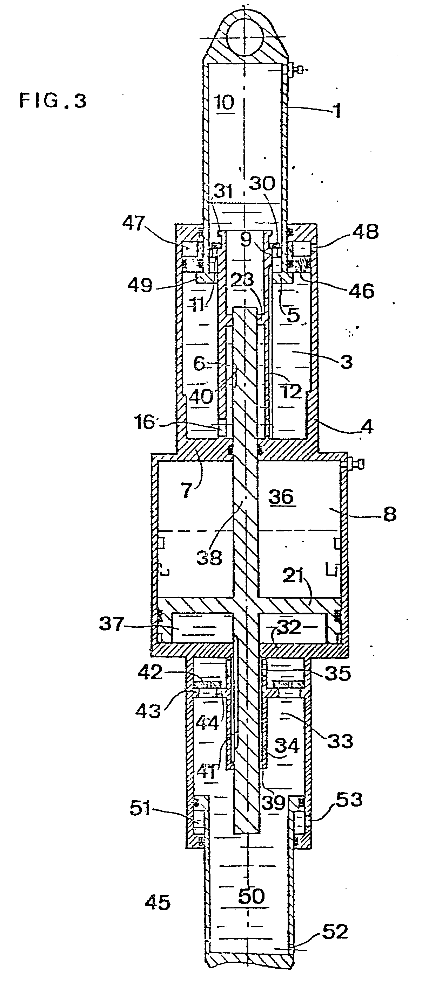

En référence à la figure 3, on retrouve une tige d'amortisseur 1, renfermant une chambre de gaz basse pression 10, et montée coulissante avec étanchéité dans une chambre 3 d'un cylindre 4, dans laquelle s'étend axialement un premier manchon 6, muni sur sa face externe d'une rainure longitudinale 12, et porté par une première paroi transversale 7 du cylindre 4. La rainure 12 coopère avec un piston d'amortisseur 5, porté par la tige 1, pour définir un orifice permanent de laminage en compression d l'huile passant de la chambre 3 dans la tige 1, en chargeant la chambre basse pression 10, après avoir soulevé un clapet 30 de freinage en détente de cette chambre 10, le clapet 30 étant disposé en regard des orifices permanents de libre passage 11, percés dans la tête élargie 9, du manchon 1, sur laquelle coulisse la tige 1. Une butée annulaire 31, portée à l'extrémité libre du manchon 6, limite les déplacements du clapet 30. Le premier manchon 6 présente, à sa base, un passage radial 16, de section très supérieure à celle de la rainure 12, assurant la communication entre l'intérieur du manchon 6 et la chambre 3 séparée par la cloison 7 d'une seconde chambre 8 elle-même séparée par une seconde cloison transversale 32 d'une troisième chambre 33 du cylindre 4, remplie d'huile, et dans laquelle s'étend un second manchon 34, porté par la seconde paroi 32, et dont la base présente un passage radial 35, dont la section est également très supérieure à celle de la rainure 12. Un piston séparateur 21 est monté coulissant avec étanchéité dans la chambre 8 et sépare une chambre de gaz à haute pression 36 d'un volume d'huile 37. Le piston séparateur 21 porte une tige rainurée 38, traversant la seconde paroi 32, et, avec étanchéité, la première paroi 7, et guidée dans le premier manchon 6 par un épaulement 23 interne à ce dernier, et dans le second manchon 34 par un épaulement 39 à l'extrémité libre de ce dernier. La tige rainurée 38 présente une première rainure longitudinale 40, dans sa partie située entre la paroi 7 et l'épaulement 23 lorsque le dispositif est en butée, détendu, ainsi qu'une seconde rainure longitudinale 41, dans sa partie située essentiellement dans le manchon 34, l'extrémité de la rainure 41 la plus proche du piston séparateur 21 débouchant cependant dans le volume 37. Un clapet 42 de freinage en détente de la chambre haute pression 36 est disposé dans la troisième chambre 33, entre la seconde paroi 32 et un siège constitué par deux épaulements annulaires en regard, dont l'un 43 est interne au cylindre 4 et dont l'autre 44 est externe au second manchon 34, le siège étant disposé au-delà du passage radial 35, vers l'extrémité libre du manchon 34. Enfin, une tige de vérin 45 et un piston de rétraction 46 sont montés coulissants avec étanchéité, la première dans la troisième chambre 33, et le second dans la première chambre 3 et autour de la partie de la tige d'amortisseur 1 à l'intérieur de la chambre 3. Le piston de rétraction 46 définit, avec le cylindre 4 et la tige d'amortisseur 1, une chambre de rétraction 47, susceptible d'être alimentée en huile par l'orifice 48 pour commander la rétraction de la tige d'amortisseur 1 dans la chambre 3, par appui du piston de rétraction 46 contre la butée annulaire 49 que constitue le bord latéral externe du piston d'amortisseur 5. Par sa face interne, la tige de vérin 45 définit avec la chambre 33 une chambre de descente 50 du dispositif, tandis que sa face externe définit avec la chambre 33 une chambre de relevage 51, les chambres 50 et 51 étant susceptibles d'être alimentées en huile respectivement par les orifices 52 et 53 pour commander la sortie ou la rentrée de la tige de vérin 45 de ou dans la chambre 33 du cylindre 4.

Le dispositif dont la structure vient d'être décrite constitue un amortisseur-vérin, assurant la fonction d'amortisseur dans les mêmes conditions que le dispositif représenté sur la figure 1, pour les vitesses normales d'atterrissage, mais permettant, en outre, soit de relever l'atterrisseur, lorsque les chambres de relevage 51 et de rétraction 47 sont alimentées en huile, la chambre 50 étant vidée, soit de descendre l'atterrisseur, lorsque les chambres de rétraction et de relevage 47 et 51 sont vidées et que la chambre de descente 50 est alimentée, soit de surbaisser l'aérodyne reposant sur ses atterrisseurs, en alimentant la chambre de relevage 51 et en vidant la chambre 50, la position de l'amortisseur sous charge statique n'étant pas modifiée.

En cas de crash, la section de la rainure 12 étant trop faible pour permettre un amortissement convenable par enfoncement de la tige d'amortisseur 1 dans le cylindre 4, la pression dans la chambre 50, et donc dans le volume d'huile 37, en communication avec cette dernière par le passage radial 35 et l'extrémité de la rainure 41, croît rapidement jusqu'à atteindre le niveau de pression de la chambre haute pression 36. Puis le piston séparateur 21 et la tige rainurée 38 sont déplacés, en chargeant la chambre haute pression 36, ce qui amène la rainure 41 de part et d'autre de la cloison 32. L'huile peut ainsi s'écouler de la chambre 50 vers le volume 37, ce qui autorise une éventuelle surcourse, si la tige de vérin 45 se trouvait préalablement sortie. Après un déplacement donné du piston séparateur 21 et de la tige rainurée 58, la rainure 40 vient en regard de l'épaulement 23 dans le manchon 6, ce qui permet le passage d'huile de la chambre 3 directement dans la tige 1, en chargeant la chambre basse pression 10.

L'amortisseur-vérin fonctionne, dans cette configuration, en limiteur d'effort, ne transmettant aucune pointe d'effort et assurant une absorption d'énergie sur l'ensemble des courses de la tige d'amortisseur 1 et de la tige de vérin 45 dans le cylindre 4. Les dispositifs selon l'invention, dans leur version amortisseur ou amortisseur-vérin, équiperont avantageusement les trains d'atterissage d'hélicoptères, les chambres basse et haute pression pouvant être remplies d'un gaz, par exemple l'azote, sous pression, ou bien d'élastomères, de gommes, de matériaux déformables ou friables assurant la même fonction.

**Revendications**

1. Amortisseur de suspension, notamment pour train d'atterrissage d'aérodyne, comprenant une tige d'amortisseur (1) renfermant une chambre de rappel élastique à basse pression (10), et montée coulissante avec étanchéité à l'intérieur d'une première chambre (3), remplie de fluide hydraulique, d'un cylindre (4), l'extrémité de la tige (1) interne au cylindre (4) portant un piston (5) guidé sur la face externe d'un premier manchon (6), solidaire d'une première paroi transversale (7) du cylindre (4), séparant la première chambre (3) d'une seconde chambre (8), du cylindre (4), dans laquelle un piston séparateur (21), monté coulissant avec étanchéité, sépare une chambre de rappel élastique à haute pression (20, 36) d'un volume de fluide hydraulique (26, 37), le piston (5) de la tige d'amortisseur (1) définissant avec le manchon (6) au moins un orifice permanent de laminage en compression (12), ledit piston séparateur (21) portant une tige rainurée (22, 38), traversant la première paroi transversale (7) du cylindre (4) et guidée à l'intérieur du premier manchon (6) dont la base présente un passage radial (16) de section très supérieure à celle du ou des orifices permanents (12) de laminage en compression, de sorte qu'en cas d'enfoncement de la tige d'amortisseur (1) dans le cylindre (4), avec une vitesse très supérieure à celle pour laquelle le ou les orifices permanents de laminage (12) en compression ont été calibrés, le piston séparateur (21) est déplacé à l'encontre de la chambre élastique de rappel à haute pression (20, 36), en découvrant des orifices de passage du fluide hydraulique, définis par les rainures (24, 25—40, 41) de la tige rainurée (22, 38) et conditionnés pour la vitesse d'enfoncement de la tige (1) dans le cylindre (4), caractérisé en ce que la tige rainurée (22, 38) est guidée par un épaulement interne (23) au premier manchon (6), et présente une première rainure longitudinale (24, 40) qui, à la suite d'un déplacement du piston séparateur (21) en compression, vient en regard de l'épaulement (23) et définit avec lui un orifice autorisant le libre passage, vers la chambre de rappel à basse pression (10), du fluide hydraulique de la première chambre (3) du cylindre (4) s'écoulant au travers du passage radial (16) à la base du premier manchon (6).

2. Amortisseur selon la revendication 1 caractérisé en ce que l'un au moins des orifices permanents de laminage en compression est constitué par la coopération du piston (5) de la tige d'amortisseur (1) et d'une rainure longitudinale (12) sur la face externe du premier manchon (6), dont l'extrémité libre est conformée en tête élargie (9), percée d'au moins un orifice permanent (11) de libre passage du fluide hydraulique, et guidée sur la face interne de la tige d'amortisseur (1).

3. Amortisseur selon l'une des revendications 1 et 2, caractérisé en ce que la tige rainurée (22) présente à sa base une seconde rainure longitudinale (25), dont l'extrémité la plus proche du piston séparateur (21) permet, en position détendue de l'amortisseur, la communication par l'intermédiaire du passage radial (16) du premier manchon (6) entre la première chambre (3) du cylindre (4) et le volume de fluide hydraulique (26) de la seconde chambre (8), de sorte des charges en compression supérieures aux charges normales, le piston séparateur (21) et latige rainurée (22) sont déplacés, et la seconde rainure (25) s'étend de part et d'autre de la première cloison transversale (7), pour favoriser l'écoulement de fluide hydraulique de la première chambre (3) vers le volume de fluide hydraulique (26) de la seconde chambre (8).

4. Amortisseur selon la revendication 3, caractérisé en ce qu'un clapet (14) de freinage en détente de la chambre basse pression (10), retenu dans une partie de la première chambre (3) du cylindre (4), définie entre piston (5) de tige d'amortisseur (1), tige d'amortisseur (1) et cylindre (4), est disposé en regard d'orifices (15) de libre passage du fluide hydraulique, percés dans le piston (5) de la tige d'amortisseur (1), les déplacements du clapet (14) étant limités entre le piston (5) et une butée annulaire (13) portée par la tige d'amortisseur (1), et limitant la sortie de celle-ci hors du cylindre (4), et en ce qu'un clapet (19) de freinage en détente de la chambre haute pression (20) est monté dans la première chambre (3) du cylindre (4), ses déplacements étant limités entre la première paroi transversale (7) du cylindre (4) et un siège constitué par un épaulement interne (18) au cylindre (4) et un épaulement (17) externe au premier manchon (6), en regard l'un de l'autre, au-delà du passage radial (16) du premier manchon (6), vers l'extrémité libre de ce dernier.

5. Amortisseur selon l'une des revendications 1 et 2, caractérisé en ce que le cylindre (4) comprend une troisième chambre (33) remplie de fluide hydraulique dans laquelle une tige de vérin (45), montée coulissante avec étanchéité, définit respectivement par sa face interne et par sa face externe une chambre de descente (50) et une chambre de relevage (51) susceptibles d'être alimentées en fluide hydraulique pour assurer respectivement la sortie et la rentrée de la tige de vérin (45) de ou dans la troisième chambre (33) du cylindre (4).

6. Amortisseur selon la revendication 5, caractérisé en ce que la troisième chambre (33) du cylindre (4) est séparéee de la seconde (8) par une seconde paroi transversale (32) du cylindre (4), solidaire d'un second manchon (34), présentant à sa base un passage radial (35) de section très supérieure à celle du ou des orifices permanents (12) de laminage en compression, et s'étendant axialement dans la troisième chambre (33), la tige rainurée (38) solidaire du piston séparateur (21) traversant également la seconde paroi (32) en étant également guidée dans le second manchon (34), et présentant une seconde rainure longitudinale (41), dont l'extrémité la plus proche du piston séparateur (21) permet, en position détendue de l'amortisseur, la communication entre la troisième chambre (33) du cylindre (4) et le volume de fluide hydraulique (37) de la seconde chambre (8), par l'intermédiaire du passage radial (35) à la base du second manchon (34), de sorte que pour des charges en compression supérieures aux charges normales, le piston séparateur (21) et la tige rainurée (38) sont déplacés, et la seconde rainure (41) s'étend de part et d'autre de la seconde cloison transversale (32), pour favoriser l'écoulement du fluide hydraulique de la troisième chambre (33) vers le volume de fluide hydraulique (37) de la seconde chambre (8).

7. Amortisseur selon la revendication 6, caractérisé en ce qu'un piston de rétraction (46), monté coulissant avec étanchéité, d'une part, à l'intérieur de la première chambre (3) du cylindre (4), d'autre part, autour de la partie de la tige d'amortisseur (1) interne à la première chambre (3), définit avec le cylindre (4) une chambre de rétraction (47), susceptible d'être alimentée en fluide hydraulique, pour appliquer le piston de rétraction (46) contre une butée (49) solidaire de la tige d'amortisseur (1), et commander la rétraction de cette dernière dans la première chambre (3) du cylindre (4).

8. Amortisseur selon la revendication 9, caractérisé en ce qu'un clapet (30) de freinage en détente de la chambre basse pression (10) est retenu entre la tête élargie (9) et une butée annulaire (31) de l'extrémité libre du premier manchon (6), en regard des orifices permanents (11) de libre passage percés dans la tête élargie (9), et en ce qu'un clapet (42) de freinage en détente de la chambre haute pression (36) est monté dans la troisième chambre (33) du cylindre (4), entre la seconde paroi transversale (32) du cylindre (4) et un siège constitué par un épaulement (43) interne au cylindre (4) et un épaulement (44) externe au second manchon (34), en regard l'un de l'autre, au-delà du passage radial (35) du second manchon (34) vers l'extrémité libre de ce dernier.

9. Amortisseur selon l'une des revendications 1 à 8, caractérisé en ce que la ou les rainures (24, 25—40, 41) de la tige rainurée (22, 38) sont de section progressive afin d'adapter les orifices de passage qu'elles définissent aux vitesses d'enfoncement de la ou des tiges (1, 45) dans le cylindre.

## Patentansprüche

1. Suspensions-Stoßdämpfer insbesondere für das Fahrwerk eines Luftfahrzeugs mit einer Dämpferstange (1), die eine elastische Niederdruckrückstellkammer (10) einschließt und gleitbeweglich abgedichtet im Inneren einer ersten mit Hydraulikfluid gefüllten Kammer (3) eines Zylinders (4) montiert ist, wobei das im Innern des Zylinders (4) befindliche Ende der Stange (1) einen Kolben (5) trägt, der auf seiner Aussenfläche von einer ersten Hülse (6) geführt ist, welche mit einer ersten Querwandung (7) des Zylinders (4) verbunden ist, die die erste Kammer (3) von einer zweiten Kammer (8) des Zylinders (4) trennt, in welcher ein Trennkolben (21) abgedichtet gleitbeweglich eine elastische Hochdruckrückstellkammer (20, 36) von einem Hydraulikfluidvolumen (26, 35), wobei der Kolben (5) der Dämpferstange (1) mit der Hülse (6) mindestens eine permanente Kompressionslaminageöffnung (12) begrenzt, wobei der Trennkolben (21) eine genutete Stange (22, 38) trägt, welche die erste Querwandung (7) des Zylinders (4) und im Innern der ersten Hülse (6) geführt ist, deren Basis einen Radialdurchlaß (16) mit einem Querschnitt aufweist, der sehr viel größer ist als derjenige aller permanenten Öffnungen (12) derart, daß im Falle des Einschiebens der Dämpferstange (1) in den Zylinder (4) mit einer Geschwindigkeit, die sehr viel höher ist als diejenige, für die die permanenten Kompressionslamigageöffnungen (12) kalibriert sind, der Trennkolben (21) entgegen der elastischen Hochdrückstellkammer (20, 36) verschoben wird unter Freigeben von Öffnungen für den Durchtritt von Hydraulikfluid, begrenzt von den Nuten (24, 25—40, 41) der genuteten Stange (22, 38) und konditioniert für die Geschwindigkeit der Einschiebung der Stange (1) in den Zylinder (4), dadurch gekennzeichnet, daß die genutete Stange (22, 38) von einer inneren Schulter (23) der ersten Hülse (6) geführt ist und eine erste Längsnut (24, 40) aufweist, die infolge einer Verschiebung des Trennkolbens (21) unter Druck in Ausfluchtung mit der Schulter (23) gelangt und mit dieser eine Öffnung begrenzt, welche den freien Durchtritt von Hydraulikfluid aus der ersten Kammer (3) des Zylinders (4) zur Hochdruckrückstellkammer (10) ermöglicht, wobei der Durchfluß quer durch die Radialpassage (16) an der Basis der ersten Hülse (6) erfolgt.

2. Suspensions-Stoßdämpfer nach Anspruch 1, dadurch gekennzeichnet, daß mindestens eine der permanenten Kompressionslaminageöffnungen durch Zusammenwirken des Kolbens (5) der Dämpferstange (1) und einer Längsnut (12) auf der Außenseite der ersten Hülse (6) gebildet wird, deren freies Ende als vergrößerter Kopf (9) ausgebildet ist, durchbohrt von mindestens einer permanenten Öffnung (11) des freien Durchtritts des Hydraulikfluids und geführt auf der Innenseite der Dämpferstange (1).

3. Suspensions-Stoßdämpfer nach Anspruch 1 oder 2, dadurch gekennzeichnet, daß die genutete Stange (22) an ihrer Basis eine zweite Längsnut (25) aufweist, deren dem Trennkolben (21) nahes Ende in der ausgefahrenen Position des Dämpfers die Kommunikation über die Radialpassage (16) der ersten Hülse (6) zwischen der ersten Kammer (3) des Zylinders (4) und dem Hydraulikfluidvolumen (26) der zweiten Kammer (8) erlaubt, derart, daß für Kompressionsbelastungen oberhalb normaler Belastungen der Trennkolben (21) und die genutete Stange (22) verschoben werden und daß die zweite Nut (25) sich beidseits der ersten Querwand (7) erstreckt zum Begünstigen des Durchflusses von Hydraulikfluid aus der ersten Kammer (3) in Richtung auf das Hydraulikfluidvolumen (26) der zweiten Kammer (8).

4. Suspensions-Stoßdämpfer nach Anspruch 3, dadurch gekennzeichnet, daß eine Ausfahrbremsklappe (14) der Niederdruckkammer (10), gehalten in einem Abschnitt der ersten Kammer (3) des Zylinders (4), die begrenzt ist zwischen dem Kolben (5) der Dämpferstange (1), der Dämpferstange (1) und dem Zylinder (4) gegenüber den Öffnungen (15) für den freien Durchtritt von Hydraulikfluid angeordnet ist, die in den Kolben (5) der Dämpferstange (1) gebohrt sind, wobei die Versetzung der Klappe (14) begrenzt wird zwischen dem Kolben (5) und einem Anschlagring (13), der von der Dämpferstange (1) getragen ist unter Begrenzung des Austritts derselben aus dem Zylinder (4), und daß eine Ausfahrbremsklappe (19) der Hochdruckkammer (20) in der ersten Kammer (3) des Zylinders (4) montiert ist, wobei ihre Verschiebungen begrenzt sind zwischen der ersten Querwandung (7) des Zylinders (4) und einem Sitz, gebildet von einer Innenschulter (18) des Zylinders (4) und einer Außenschulter (17) der ersten Hülse (6), die einander gegenüberstehen, oberhalb des Radialdurchlasses (16) der Hülse (6) in Richtung auf das freie Ende der letzteren.

5. Suspensions-Stoßdämpfer nach Anspruch 1 oder 2, dadurch gekennzeichnet, daß der Zylinder (4) eine dritte mit Hydraulikfluid gefüllte Kammer (33) aufweist, in der eine abgedichtet gleitbeweglich angeordnete Schubstange (45) mit ihrer Innenseite bzw. Außenseite eine Ausfahrkammer (50) und eine Einfahrkammer (51) definiert, die mit Hydraulikfluide ansteuerbar sind zum Sicherstellen des Ausfahrens bzw. Einfahrens der Schubstange (45) aus der bzw. in die dritte Kammer (33) des Zylinders (4).

6. Suspensions-Stoßdämpfer nach Anspruch 5, dadurch gekennzeichnet, daß die dritte Kammer (33) des Zylinders (4) von der zweiten (8) durch eine zweite Querwandung (32) des Zylinders (4) getrennt ist, die verbunden ist mit einer zweiten Hülse (34), welche an ihrer Basis einen Radialdurchtritt (35) mit einem Querschnitt aufweist, der wesentlich größer ist als derjenige aller permanenten Kompressionslaminageöffnungen und sich in Axialrichtung in die dritte Kammer (33) erstreckt, wobei die genutete Stange (38), verbunden mit dem Trennkolben (28) ebenfalls die zweite Wandung (32) durchsetzt und in der zweiten Hülse (34) ebenfalls geführt ist, sowie eine zweite Längsnut (41) aufweist, deren dem Trennkolben (21) näheres Ende in der ausgefahrenen Dämpferstellung die Kommunikation zwischen der dritten Kammer (33) des Zylinders (4) und dem Hydraulikfluidvolumen (37) der zweiten Kammer (8) über den Radialdurchtritt (35) an der Basis der zweiten Hülse (34) derart ermöglicht, daß für Kompressionsbelastungen oberhalb normaler Belastungen der Trennkolben (21) und die genutete Stange (38) verschoben werden und, wobei die zweite Nut (41) sich beidseits der zweiten Querwandung (32) erstreckt zum Begünstigen des Durchflusses von Hydraulikfluid aus der dritten Kammer (33) in Richtung auf das Hydraulikfluidvolumen (37) der zweiten Kammer (8).

7. Suspensions-Stoßdämpfer nach Anspruch 6, dadurch gekennzeichnet, daß ein Einziehkolben 46 abgedichtet gleitbeweglich einerseits im Innern der ersten Kanner (3) des Zylinders (4) und andererseits um den Abschnitt der Dämpferstange (1) innerhalb der ersten Kammer (3) angeordnet ist und mit dem Zylinder (4) eine Einziehkammer (47) begrenzt, die mit Hydraulikfluid ansteuerbar ist, um den Einziehkolben (46) gegen einen Anschlag (49) anzulegen, der mit der Dämpferstange (1) verbunden ist und zum Steuern des Zurückziehens der letzteren in die erste Kammer (3) des Zylinders (4).

8. Suspensions-Stoßdämpfer nach Anspruch 9, dadurch gekennzeichnet, daß eine Ausziehbremsklappe (30) der Niederdruckkammer (10) zwischen dem vergrößerten Kopf (9) und einem Anschlagring (31) des freien Endes der ersten Hülse (6) gehalten ist in Ausfluchtung mit den permanenten Öffnungen (11) für den freien Durchtritt, die in den vergrößerten Kopf (9) eingebohrt sind und daß eine Ausziehbremsklappe (42) der Hochdruckkammer (36) in der dritten Kammer (33) des Zylinders (4) zwischen der zweiten Querwandung (32) des Zylinders (4) und einem Sitz angeordnet ist, gebildet von einer Innenschulter (43) des Zylinders (4) und einer Außenschulter (44) der zweiten Hülse (34), die einander gegenüber stehen oberhalb des Radialdurchtritts (35) der zweiten Hülse (34) in Richtung auf das freie Ende der letzteren.

9. Suspensions-Stoßdämpfer nach einem der Ansprüche 1 bis 8, dadurch gekennzeichnet, daß die oder alle Nuten (24, 25—40, 41) der genuteten Stange (22, 38) mit einem progressiven Querschnitt ausgebildet sind, um die Durchtrittsöffnungen, welche sie begrenzen, an die Einfahrgeschwindigkeit der oder aller Stangen (1, 45) in den Zylinder anzupassen.

**Claims**

1. Suspension shock absorber notably for aerodyne landing gear, comprising a shock absorber rod (1) enclosing a low-pressure elastic return chamber (10) and mounted slidably and leaktight inside a first chamber (3) filled with hydraulic fluid, a cylinder (4), the end of the rod (1) inside the cylinder (4) carrying a piston (5) guided on the external face of a first sleeve (6) integral with the first transverse wall (7) of the cylinder (4) separating the first chamber (3) from a second chamber (8) of the cylinder (4) in which a separating piston mounted slidably and leaktight separates a high-pressure elastic return chamber (20, 26) from a volume of hydraulic fluid (26, 37) the piston (5) of the shock absorber rod (1) defining with the sleeve (6) at least one permanent compression throttling orifice (12), said separating piston (21) carrying a grooved rod (22, 28) going through the first transverse wall (7) of the cylinder (4) and guided inside the first sleeve (6) whose base has a radial passage (16) with a section much larger than that of the permanent compression throttling orifice(s) (12) so that, in case the shock absorber rod (1) is driven into the cylinder (14) with a speed much higher than that for which the permanent compression throttling orifice(s) have been calibrated, the separating piston (21) is driven against the high-pressure elastic return chamber (20, 36) thereby exposing the hydraulic fluid passage orifices defined by the grooves (24, 25—40, 41) of the grooved rod (22, 38) and conditioned for the penetration speed of the rod (1) in the cylinder (14), characterized in that the grooved rod (22, 38) is guided by a shoulder (23) inside the first sleeve (6) and has a first longitudinal groove (24, 40) which, following the movement of the separating piston (21) under compression, comes opposite the shoulder 23 and defines with it an orifice allowing the free passage toward the low-pressure return chamber (10) of the hydraulic fluid of the first chamber (3) of the cylinder (4) flowing through the radial passage (16) at the base of the first sleeve (6).

2. Shock absorber according to claim 1, characterized in that at least one of the permanent compression throttling orifices is constituted by the cooperation of the piston (5) of the shock absorber rod (1) and of a longtudinal groove (12) on the external face of the first sleeve (6) whose free end is formed into an enlarged head (9) pierced with at least one permanent orifice (11) for the free passage of hydraulic fluid and guided on the external face of the shock absorber rod (1).

3. Shock absorber according to either of claims 1 or 2, characterized in that the grooved rod (22) has at its base a second longitudinal groove (25) whose end closest to the separating piston (21) allows, in the expanded position of the shock absorber, communication via the radial passage (16) of the first sleeve (6) between the first chamber (3) of the cylinder (4) and the volume of hydraulic fluid (26) of the second chamber (8), so that for compressive loads higher than the normal loads, the separating piston (21) and the grooved rod (22) are moved, and the second groove (25) extends on either side of the first transverse wall (7) to favour the flow of hydraulic fluid from the first chamber (3) toward the hydraulic fluid volume (26) of the second chamber (8).

4. Shock absorber according to claim 3, characterized in that a valve (14) for checking the expansion of the low-pressure chamber (10), held in a part of the first chamber (3) of the cylinder (4), defined between the piston (5) of the shock absorber rod (1), the shock absorber rod (1) and the cylinder (4), is placed opposite the hydraulic fluid free passage orifices (15) pierced in the piston (5) of the shock absorber rod (1), the movements of the valve (14) being limited between the piston (5) and an annular stop (13) carried by the shock absorber rod (1) and limiting the extension of the rod outside of the cylinder (4), and in that a valve (19) for checking the expansion of the high-pressure chamber (20) is mounted in the first chamber (3) of the cylinder (4), its movements being limited between the first transverse wall (7) of the cylinder (4) and a seat constituted by a shoulder (18) inside the cylinder (4) and a shoulder (17) outside the first sleeve (6), opposite each other, beyond the radial passage (16) of the first sleeve (6), toward the free end of the latter.

5. Shock absorber according to either of claims 1 or 2, characterized in that the cylinder (4) comprises a third chamber (33) filled with hydraulic fluid in which an actuator rod (45), mounted slidably and leaktight, defines respectively by its inner face and by its outer face a lowering chamber (50) and a raising chamber (51) capable of being supplied with hydraulic fluid to secure respectively the extension and retraction of the actuator rod (45) from or into the third chamber (33) of the cylinder (4).

6. Shock absorber according to claim 5, characterized in that the third chamber (33) of the cylinder (4) is separated from the second (8) by a second transverse wall (32) of the cylinder (4) integral with a second sleeve (34), having at its base a radial passage (35) with a section much larger than that of the permanent compression throttling orifices (12) and extending axially into the third chamber (33), the grooved rod (38) integral with the separating piston (21) also going through the second wall (32) and also being guided by it in the second sleeve (38) and having a second longitudinal groove (44) whose end closest to the separating piston (21) allows, in the expanded position of the shock absorber, communication between the third chamber (33) of the cylinder (4) and the hydraulic fluid volume (37) of the second chamber (8) via the radial passage (38) at the base of the second sleeve (34) so that, for compressive loads higher than the normal loads, the separating piston (21) and the grooved rod (38) are moved, and the second rod (41) extends on either side of the second transverse wall (32) to favour the flow of hydraulic fluid from the third chamber (33) toward the hydraulic fluid volume (37) of the second chamber (8).

7. Shock absorber according to claim 6, characterized in that a retraction piston (46) mounted slidably and leaktight, on the one hand, inside the first chamber (3) of the cylinder (4) and, on the other, around the part of the shock absorber rod (1) inside the first chamber (3), defines with the cylinder (4) a retraction chamber (47) capable of being supplied with hydraulic fluid to apply the retraction piston (46) against a stop (49) integral with the shock absorber rod (1) and actuate the retraction of the latter into the first chamber (3) of the cylinder (4).

8. Shock absorber according to claim 9, characterized in that a valve (30) for checking the expansion of the low-pressure chamber (10) is held between the enlarged head (9) and an annular stop (31) of the free end of the first sleeve (6) opposite the permanent free-passage orifices (11) pierced in the enlarged head (9) and in that a valve (42) for checking the expansion of the high-pressure chamber (36) is mounted in the third chamber (33) of the cylinder (4) between the second transverse wall (32) of the cylinder (4) and a seat constituted by a shoulder (43) inside the cylinder (4) and a shoulder (44) outside the second sleeve (34), opposite each other, beyond the radial passage (35) of the second sleeve (34) toward the free end of the latter.

9. Shock absorber according to any of claims 1 through 8, characterized in that the groove(s) (24, 25—40, 41) of the grooved rod (22, 38) have a progressive section in order to adapt the passage orifices which they define to the penetration speeds of the rod(s) (1, 45) into the cylinder.

FIG.1

**F I G . 2**

FIG.3